# EUROPÄISCHE PATENTSCHRIFT

(11) **EP 0 808 349 B1**
(45) Veröffentlichungstag und Bekanntmachung des Hinweises auf die Patenterteilung: **25.11.1998**
(21) Anmeldenummer: 96904030.2
(22) Anmeldetag: 09.02.1996
(51) Int. Cl.: C09J 123/00

(54) **HEISSSCHMELZKLEBSTOFFE FÜR FAHRZEUGLEUCHTEN ODER FAHRZEUGSCHEINWERFER**
HOT-MELT ADHESIVES FOR VEHICLE LIGHTS OR VEHICLE HEADLAMPS
ADHESIFS THERMOFUSIBLES POUR FEUX OU PROJECTEURS DE VEHICULES

(30) Priorität: 10.02.1995 DE 19504425
(43) Veröffentlichungstag der Anmeldung: 26.11.1997
(73) Patentinhaber: Hella KG Hueck & Co., 59552 Lippstadt (DE)
(72) Erfinder: SCHMIDT, Stephan, D-59557 Lippstadt (DE)
(86) Internationale Anmeldenummer: EP9600536
(87) Internationale Veröffentlichungsnummer: WO9624643

(56) Entgegenhaltungen:
- US-A- 3 991 025
- DATABASE WPIL, Nr. 87-232 054, DERWENT PUBLICATIONS LTD., London; & JP,A,62 156 183 (NITTA GELATINEKK),
- DATABASE WPIL, Nr. 80-35 699c, DERWENT PUBLICATIONS LTD., London; & JP,A,55 048 235 (DJK INT KK),
- DATABASE WPIL, Nr. 87-105 513, DERWENT PUBLICATIONS LTD., London; & JP,A,62 053 386 (TOA GOSEI CHEM IND LTD),

## Beschreibung

Gegenstand der Erfindung sind Heißschmelzklebstoffe zum Verbinden von glasartigen Kunststoffmaterialien mit thermoplastischen oder duroplastischen Kunststoffmaterialien sowie deren Anwendung zum Verbinden von Lichtscheiben mit Lampengehäusen von Fahrzeugleuchten oder Fahrzeugscheinwerfern sowie die unter Verwendung der Heißschmelzklebstoffe hergestellten Fahrzeugleuchten oder Fahrzeugscheinwerfer.

Heißschmelzklebstoffe gehören zu den physikalisch abbindenden Klebstoffarten, die sich meist ohne chemische Vernetzung oder Ablüften von Lösungsmitteln nur aufgrund eines Erstarrungsvorgangs mit fallender Temperatur verfestigen. Reaktive Heißschmelzklebstoffe binden nach der Montage ab und erhalten ihre Endfestigkeit durch eine nachfolgend ablaufende chemische Reaktion (Vernetzung).

Gegenüber chemisch reagierenden und Lösemittel-haltigen Klebstoffen weisen Heißschmelzklebstoffe einige Vorteile auf:
- Abwesenheit von Lösungsmitteln oder Monomeren, daher nur geringe Anforderungen an Umwelt- und Arbeitsschutz,
- keine Dosier- und Mischfehler durch Maschinenfehler oder das Personal möglich,
- sehr kurze Abbindezeiten, wenige Sekunden bis ca. eine Minute und
- thermisch lösbare Fügung.

Hieraus resultieren jedoch auch einige grundsätzliche Nachteile:
- Neigung zum Kriechen, vor allem bei erhöhter Temperatur und statischer Dauerbelastung,
- Wärmebelastung der Fügepartner bei der Applikation der Heißschmelzklebstoffe,
- relativ geringe Temperaturstandfestigkeit gegenüber chemisch vernetzenden Systemen und
- notwendige Bereitstellung von geeigneten Aufschmelzanlagen, wobei die Verarbeitungsviskositäten von Heißschmelzklebstoffen in der Regel wesentlich höher sind, als die von Zwei-Komponenten- oder Lösemittel-haltigen Klebesystemen.

Im Stand der Technik bekannte Heißschmelzklebstoffe bestehen überwiegend aus den Materialien Polyamid, gesättigten Polyestern bzw. Polyurethanen und Ethylen-Vinylacetatcopolymeren. In der Abdichtungs- und Montagetechnik findet man darüber hinaus häufig unpolare Butyl-Dichtungsmassen. Diese Systeme setzen sich im allgemeinen zusammen aus klebrigmachenden Harzen, Rückgratpolymeren, Flexibilisatoren, Füllstoffen, Stabilisatoren und Haftungsvermittlern.

Das Aufschmelzverhalten ist in der Regel nicht scharf auf einen engen Temperaturbereich begrenzt, sondern umfaßt einen Schmelzbereich von 20 bis 100 °C Temperaturdifferenz. Um diesen Betrag unterscheiden sich dann auch mindestens die maximale Gebrauchs- von der minimalen Auftragstemperatur.

Um speziell gewünschte Eigenschaften zu erreichen, müssen speziell geeignete Bestandteile mit recht unterschiedlichen Schmelz- und/oder Erweichungsbereichen, unterschiedlichen Molekulargewichten und teilweise kritischer Verträglichkeit miteinander zu einem möglichst homogenen Heißschmelzklebstoff vermischt werden.

Da es sich auch im Stand der Technik teilweise um Polymere mit Molekulargewichten um 10⁶ g x mol⁻¹ handelt, müssen hohe Scherkräfte beim Mischen wirksam werden. Um die höher molekularen Polymere bei diesem Vorgang zu schonen und allgemein Lösungsprozesse zu beschleunigen, werden bekanntermaßen die Stoffe bei erhöhter Temperatur in einem geeigneten Mischgerät ineinander eingearbeitet. Dabei kann es sich beispielsweise um einen Zweiwellenkneter handeln in dem der Heißschmelzklebstoff bei etwa 100 bis 200°C, üblicherweise 120 bis 160°C gemischt wird. Beispielhaft für den sehr umfangreichen Stand der Technik wird auf die US-4 857 594-A hingewiesen, die einen Heißschmelzklebstoff beschreibt, der insbesondere geeignet ist, Polyolefinformkörper mit sich selbst oder anderen Polyolefinformkörpern sowie anderen Nichtpolyolefinformkörpern zu verbinden.

Dieser Heißschmelzklebstoff besteht aus
(A) 60 bis 100 Gew.-% einer Mischung bestehend aus einem amorphen Polypropylen (Poly-α-olefin), einem Blockcopolymer ausgewählt aus der Gruppe bestehend aus Styrol-Ethylen/Buten-1-Blockcopolymeren und Styrol-Ethylen/Propylen-Blockcopolymeren und einem klebrig machenden Kohlenwasserstoffharz, wobei das amorphe Polypropylen eine Kristallinität von weniger als 10 Gew.-% und ein Molekulargewicht im Bereich von 300 bis 50000 aufweist und das Kohlenwasserstoffharz einen Ring- und Kugelerweichungspunkt im Bereich von etwa 10° bis 150°C aufweist, wobei die Komponenten in den folgenden relativen Mengen vorhanden sind:

| | |
|---|---|
| amorphes Polypropylen | 5 bis 95 Gew.-%, |
| Blockcopolymer | 2,5 bis 40 Gew.-% und |
| Kohlenwasserstoffharz | 2,5 bis 55 Gew.-% und |

(B) 0 bis 5 Gew.-% bezogen auf das Gewicht des fertigen Heißschmelzklebstoffes eines Antioxidationsmittel und
(C) 0 bis 40 Gew.-%, bezogen auf das Gewicht der fertigen Klebstoffzusammensetzung einer Verbindung oder einer Mischung von Verbindungen ausgewählt aus der Gruppe bestehend aus einem isotaktischen Polypropylen, Ethylen-Propylencopolymeren, Paraffin und mikrokristallinen Wachsen, Fischer-Tropsch-Wachsen, niedermolekulargewichtigen Polybutenen, Polyisobutylen, niedermolekulargewichtigen Polyethylenen, Polyethylen mit niederer Dichte und Prozessölen.

Bedingt durch die Art der miteinander zu verklebenden Substrate, das heißt im wesentlichen thermoplastischen Polyolefine ist die Variationsbreite der Einsatzstoffe groß. Bei speziellen Anwendungszwecken sind jedoch die Grundrezepturen zu teuer und in der Regel nicht geeignet, beispielsweise glasartige Flächen wie Polycarbonat dauerhaft zu verkleben.

In US-4 783 504-A wird ein lösungsmittelfreier Heißschmelzklebstoff beschrieben, der unter anderem zum Versiegeln von Isolierglas oder Fahrzeugscheinwerfern mit Glasstreuscheibe geeignet sein soll. Die Zusammensetzung umfaßt (a) 100 Gew.-Teile einer Silan-funktionalisierten Polymerkomponente und (b) eine gewisse Menge einer damit kompatiblen Mittelblockkomponente zur Steuerung der Glasübergangstemperatur. Dabei wird das Silan-funktionalisierte Polymere eingesetzt, um die Glashaftung zu erreichen.

Streuscheiben und Lichtscheiben aus glasartigen Kunststoffmaterialien werden im Stand der Technik mit Lampengehäusen in der Regel mit Dichtungsmaterialien und mechanischer Fixierung durch Klammern miteinander verbunden. Zuvor wird die Streuscheibe oder Lichtscheibe mit einer Kratzfestausrüstung, insbesondere durch Aufspritzen und nachfolgende Härtung unter UV-Belichtung, ausgestattet.

Die im Stand der Technik vorgeschlagenen Dichtungsmaterialien zur Abdichtung des Zwischenraums zwischen Lampengehäuse und Kunststoffscheibe machten die mechanische Fixierung der Streuscheibe oder Lichtscheibe, beispielsweise durch Klammern erforderlich, um eine dauerhafte paßgenaue Positionierung während des Gebrauches des Fahrzeuges zu gewährleisten.

Dementsprechend besteht die Aufgabe der vorliegenden Erfindung in der Bereitstellung von insbesondere preiswerten Heißschmelzklebstoffen zum Verbinden von glasartigen Kunststoffmaterialien mit thermoplastischen oder duroplastischen Kunststoffmaterialien.

Die vorstehend genannte Aufgabe wird in einer ersten Ausführungsform gelöst durch Heißschmelzklebstoffe zum Verbinden von glasartigen Kunststoffmaterialien mit thermoplastischen oder duroplastischen Kunststoffmaterialien enthaltend:
a) 0,5 bis 15 Gew.-%, insbesondere 0,5 bis 10 Gew.-%, gegebenenfalls gepfropfte thermoplastische Elastomere,
b) 5 bis 40 Gew.-%, insbesondere 10 bis 35 Gew.-%, gegebenenfalls gepfropfte Poly-α-olefine
c) 5 bis 45 Gew.-%, insbesondere 15 bis 40 Gew.-%, Klebeharze und
d) 5 bis 55 Gew.-%, insbesondere 15 bis 45 Gew.-%, Polyisobutylene.

Die erfindungsgemäßen Heißschmelzklebstoffe können in Kartuschen oder Faß-ähnlichen Gebinden wie auch als offene Blockware konfektioniert werden. Bei der Verwendung von Kartuschen wird häufig der gesamte Klebstoff erhitzt und mittels eines Handauftragegeräts verarbeitet. Bei größeren Faß-ähnlichen Gebinden wird in einer stationären Anlage ein beheizter Stempel mit Abnahme- und Förderleitung auf die Heißschmelzklebstoffoberfläche gesetzt und nur aus dem Oberflächenbereich abgenommen. Dabei wird nur ein Teil des Heißschmelzklebstoffs erwärmt. Da der Heißschmelzklebstoff dabei zwangsgefördert wird, bestehen bei dieser Art von Auftragetechnik keine hohen Anforderungen an dessen Fließcharakeristik.

Zum anderen kann auf diese aufwendige Bereitstellung des Schmelzklebstoffs zu gunsten offener Blockware gegebenenfalls mit Abhäsivpapier als Trennlage verzichtet werden, indem Tankschmelzanlagen verwendet werden. Hierbei werden Heißschmelzklebstoffblöcke in einen beheizten Tank gegeben und die Schmelze wird an der untenliegenden Abnahmeöffnung über eine Pumpe der Auftragdüse zugeführt.

Bei dieser Art der Bereitstellung der Heißschmelzklebstoffschmelze zur Förderung, Dosierung und Auftragung auf die Substrate werden höhere Anforderungen an die Förder- und Fließcharakteristik des Heißschmelzklebstoffes gestellt. Im Vergleich zu herkömmlichen Heißschmelzklebstoffen ist die Förderbarkeit der erfindungsgemäßen Heißschmelzklebstoffe von besonderer Bedeutung.

Insbesondere durch die Wahl der hochmolekularen Anteile wird die Fließfähigkeit des Heißschmelzklebstoffes bestimmt. Setzt man beispielsweise nur niedermolekulare und minimale Anteile von hochmolekularen Stoffen ein, so ist keine ausreichende kohäsive Festigkeit zu erreichen.

Darüber hinaus sind bei der Reversionsfähigkeit der erfindungsgemäßen Heißschmelzklebstoffe gegenüber dem Stand der Technik bedeutende Unterschiede zu erkennen. Neben dem, mehr auf physikalischen Effekten beruhenden Abbinden von Heißschmelzklebstoffen besteht naturgemäß die Möglichkeit, diese Effekte mit einer chemischen Nachvernetzung zu kombinieren.

Ein Ersatz von thermoplastischen Elastomeren durch vernetzten Butylkautschuk verursacht keine so hohe Reversionsfähigkeit, obwohl mit derartigen Polymeren auch ein gut-fließfähiger Heißschmelzklebstoff realisierbar ist.

Insbesondere der Versagensmechanismus, also ko- oder adhäsives Versagen ist erfindungsgemäß von besonderer Bedeutung. Mit Hilfe der vorliegenden Erfindung wird ein kohäsiver Versagensmechanismus bei maximalen Werten für die Zug- und Anreißfestigkeit erhalten. Für die Kälteflexibilität sind hohe Gehalte an Polyisobutylenen erforderlich. Erfindungsgemäß zeigt sich, daß besonders durch die Modifizierung mit Kohlenwasserstoffharzen die hervorragenden Werte der Haftung zu allen zu verklebenden Substraten in Kombination der Rohstoffe miteinander erreicht werden konnten. Die gute Haftung zum thermoplastischen Material wird vor allem durch Poly-α-olefine besonders durch Maleinsäureanhydrid-gepfropfte Poly-α-olefine erreicht. Hierbei ist vor allem der Umstand, daß die Substrate im spritzfrischem Zustand ohne besondere Zusatzbehandlung, die die Haftung der Klebstoffe auf den Substraten ermöglichen soll, unter Verwendung der erfindungsgemäßen Heißschmelzklebstoffen, gefügt werden können.

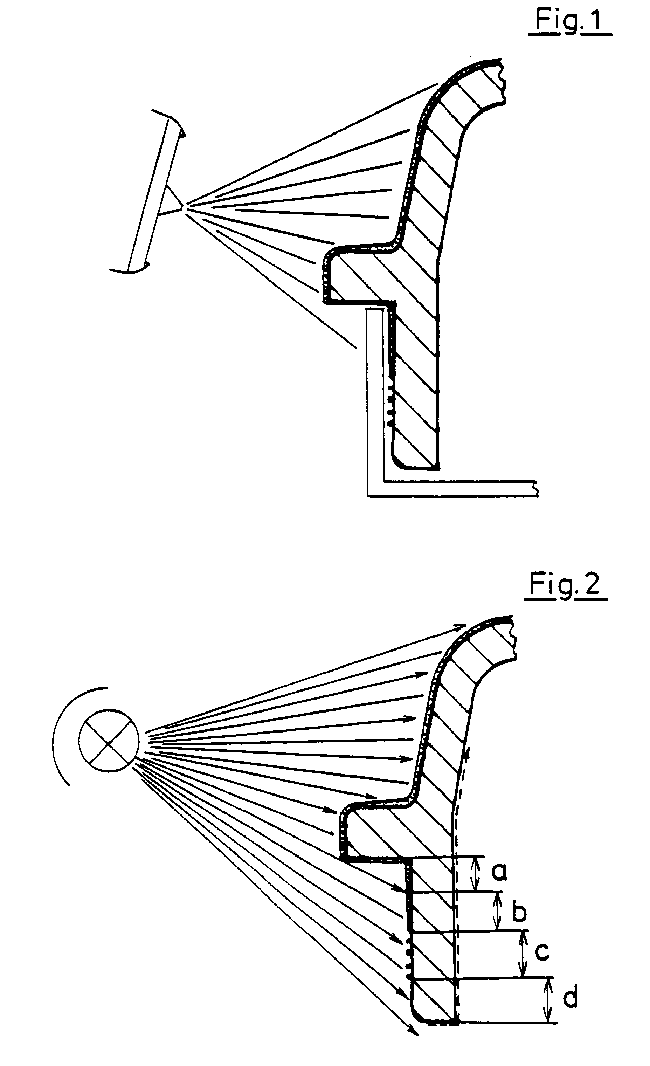

In den Fig. 1 bis 3 wird der prinzipielle Aufbau der Verbindung einer Lichtscheibe oder Streuscheibe eines Kraftfahrzeuges mit einem Gehäuse 6 wiedergegeben.

Die Streuscheibe 1 ist mit dem Lacksystem 3 zur Kratzfestausrüstung versehen. Hierzu wird die Streuscheibe 1 in einem Abdeckrahmen 2 positioniert und der Lack 3 auf die gewünschte Oberfläche mittels der Spritzdüse 4 aufgebracht.

Anschließend wird, wie in Fig. 2 dargestellt, der Lack entweder unter Wärme und/oder UV-Belichtung 5 zu einem duroplastischen Überzug ausgehärtet. Besonders bevorzugt im Sinne der vorliegenden Erfindung ist die UV-Härtung.

Bei dem Lackiervorgang muß davon ausgegangen werden, daß Lacknebel durch den Spalt zwischen Abdeckrahmen 2 und Streuscheibe 1, insbesondere auf den äußeren Streuscheibenfuß gelangt. In einem weiteren Arbeitsgang wird die gesamte Oberseite, die Fußaußenseite und mit abnehmender Intensität die Fußunter- und Innenseite der Lichtscheibe mit UV-Strahlung beaufschlagt.

In der Fig. 2 werden die verschiedenartigen Substratoberflächen der Streuscheibe dargestellt.

Der Lack 3 der Kratzfestausrüstung, der mittels UV-Belichtung 5 gehärtet werden soll, deckt einen überwiegenden Teil der Oberfläche der Streuscheibe 1 ab. In dem überwiegenden Teil der Oberfläche wird die Beschichtung ganzflächig aufgetragen sein und auch der vernetzenden UV-Strahlung ausgesetzt.

Im Bereich a) der Fig. 2 ist davon auszugehen, daß eine ganzflächige Beschichtung der Oberfläche der Streuscheibe 1 mit dem Lack vorliegt, der jedoch nicht der maximalen Intensität der UV-Belichtung 5 ausgesetzt wird aber dennoch vernetzt ist. Hieran schließt sich der Bereich b) an, in dem die Oberfläche der Streuscheibe 1 vollständig mit dem Lack beschichtet ist, der an dieser Stelle auch der maximalen UV-Belichtung 5 ausgesetzt wird.

Bedingt durch die Positionierung in einem Abdeckrahmen 2 wird weiterhin ein Oberflächenbereich c) vorhanden sein, in dem die Oberfläche der Streuscheibe 1 nur partiell beschichtet ist, wobei diese Beschichtung durch die UV-Belichtung 5 auch vernetzt wird. Hieran schließt sich der nichtbeschichtete Oberflächenbereich d) an, der nicht beschichtet, jedoch der UV-Bestrahlung ausgesetzt ist.

An der Unterseite des Streuscheibenfußes sowie an der innenliegenden Rückseite der Streuscheibe 1 wird ein weiterer Bereich der Oberfläche der Streuscheibe 1 weder beschichtet noch bestrahlt werden.

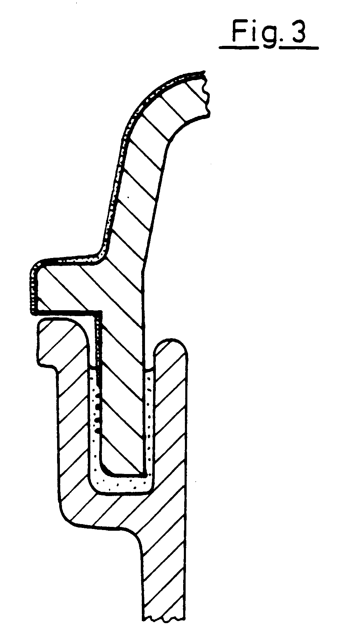

In der Fig. 3 wird die fertige Verbindung der mit einer Kratzfestausrüstung 3 versehenen Kunststoffstreuscheibe 1 mit dem Lampengehäuse 6 über den Kleber 7 beschrieben.

Damit durch eine Dichtungsmasse 7 eine ausreichende Dichtigkeit des Scheinwerfers gewährleistet werden kann, darf diese sich nicht von den verschiedenen Substratoberflächen lösen, und zwar auch bei der Einwirkung von Medien wie Wasser, Reinigungslösungen, Konservierern und Entkonservierern.

Die Adhäsion der erfindungsgemäßen Heißschmelzklebstoffe liegt auf einem so hohen Niveau, daß bei den üblichen Gebrauchstemperaturen von Kraftfahrzeugen keine Ablösung von den Substraten erfolgt. Darüber hinaus läßt sich die Masse nicht aus dem Fügespalt verdrängen. Die Festigkeit bei Gebrauchstemperaturen ist, gegenüber herkömmlichen Hotmelts, deutlich erhöht. Die erfindungsgemäßen Heißschmelzklebstoffe besitzen die Fähigkeit höhere adhäsive als kohäsive Kräfte zu übertragen, so daß bei zerstörenden Prüfungen bevorzugt Kohäsionsbrüche auftreten.

Bei sehr tiefen Temperaturen, beispielweise bei -30°C ist der Heißschmelzklebstoff noch nicht spröde oder zu hart, da sonst die Fähigkeit, Kräfte kohäsiv zu übertragen, plötzlich stark zunimmt, ohne daß die Adhäsion im selben Masse ansteigen könnte. Eine ausreichende Kälteflexibilität ist daher erfindungsgemäß erforderlich.

Für die Verarbeitung ist dagegen wichtig, daß die Masse oberhalb der maximal anzunehmenden Gebrauchstemperatur fließfähig genug ist, um von den gebräuchlichen Auftragsanlagen für Heißschmelzklebstoffe gefördert zu werden.

Ein herkömmlicher Heißschmelzklebstoff kann bei gegebener ausreichender Festigkeit bei Raumtemperatur nicht Tankanlagenverarbeitbar sein. Erst durch den Einsatz der erfindungsgemäßen Komponenten, Polyisobutylene für die Kälteflexibilität, Harze für die Haftung auf den Substraten, thermoplastische Elastomere für die kohäsive Festigkeit und die Schmelzflüssigkeit in Kombination mit gegebenenfalls gepfropften α-Polyolefinen kann das gewünschte Eigenschaftsprofil gemäß der vorliegenden Erfindung erhalten werden.

Thermoplastische Elastomere ansich sind im Stand der Technik bekannt. Hierunter versteht man Polymere, auch thermoplastische Kautschuke genannt, die im Idealfall eine Kombination der Gebrauchseigenschaften von Elastomeren und den Verarbeitungseigenschaften von Thermoplasten besitzen.

Dies kann erreicht werden, wenn in den entsprechenden Kunststoffen gleichzeitig weiche und elastische Segmente mit hoher Dehnbarkeit und niedriger Glasübergangstemperatur sowie harte kristallisierbare Segmente mit geringer Dehnbarkeit, hoher Glasübergangstemperatur und Neigung zur Assoziatbildung vorliegen. Kennzeichnend für thermoplastische Elastomere sind thermolabile reversible spaltbare Vernetzungsstellen, meist physikalischer aber auch chemischer Art. Erfindungsgemäß sind die thermoplastischen Elastomere bevorzugterweise ausgewählt aus Styroltypen, insbesondere SBS, SIS, SEBS und SEPS sowie aus Elastomerlegierungen, insbesondere EPDM/PP, NR/PP, EVA/PVDC und NBR/PP sowie aus Polyurethanen, Polyetherestern und Polyetheramiden. Die thermoplastischen Elastomere bewirken insbesondere die kohäsive Festigkeit der erfindungsgemäßen Heißschmelzklebstoffe.

Besonders die kohäsive Festigkeit kann durch den erfindungsgemäßen Einsatz von gegebenenfalls gepfropften thermoplastischen Elastomeren erhöht werden, wenn nach der Verarbeitung des Heißschmelzklebstoffs durch diese eine chemische Nachvernetzung stattfindet. Erfindungsgemäß wird dadurch die kohäsive Festigkeit bei erhöhten Temperaturen deutlich verbessert.

In einer bevorzugten Ausführungsform der vorliegenden Erfindung sind die gegebenenfalls gepfropften Poly-α-olefine ausgewählt aus amorphen α-Polyolefinen, den Mono-, Co- oder Terpolymere der Monomeren Ethen, Propen, 1-Buten, 1-Penten und 1-Hexen oder einem α-Polyolefin der allgemeinen Formel (I) 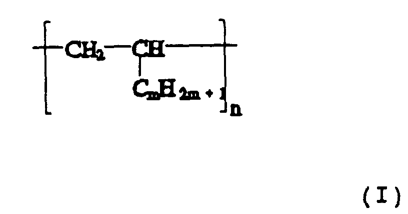 mit
m = 0 bis 15 und
n = 5 bis 2000

Diese Polyolefine bedingen die notwendige Haftung auf den Substraten. Besonders bevorzugt weisen die α-Polyolefine Teilkristallinität auf, so daß besonders bevorzugte α-Polyolefine insbesondere Polyethylen, Polypropylen und/oder Poly-1-buten hohe Taktizität in dem kristallinen Bereich aufweisen.

Zur Lösung der der Erfindung zugrundeliegenden Aufgabe ist es besonders bevorzugt, die Gesamtmenge der teuren Ausgangsmaterialien, wie thermoplastische Elastomere zu reduzieren. Erfindungsgemäß wurde gefunden, daß es möglich ist, die Gesamtmenge an thermoplastischen Elastomeren, Poly-α-olefine und Klebeharz auf weniger als 60 Gew.-% zu reduzieren. Mit diesen preisgünstigen Heißschmelzklebstoffen konnten hervorragende Klebeeigenschaften beim Verkleben von glasartigen Kunststoffmaterialien mit thermoplastischen oder duroplastischen Kunststoffmaterialien erreicht werden.

Gegebenenfalls können die eingangs definierten Poly-α-olefine und die thermoplastischen Elastomere mit weiteren Verbindungen gepfropft werden. Besonders bevorzugt ist die statistische Pfropfung mit olefinisch ungesättigten Verbindungen, die insbesondere ausgewählt sind aus Maleinsäureanhydrid, Itaconsäureanhydrid, Tetrahydrophthalsäureanhydrid und Verbindungen der allgemeinen Formel (II) 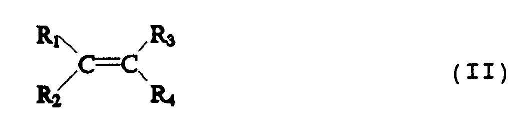 wobei
R₁ für Reste 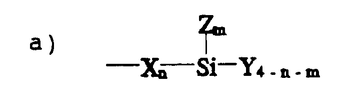 wobei
   Z für Wasserstoff, einen Methylrest oder einen Phenylrest
   X für 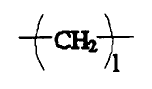 oder 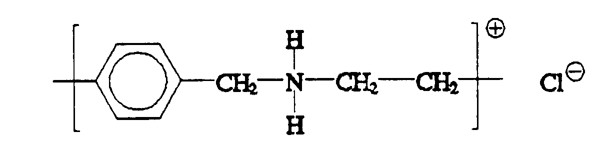
   Y für eine beliebige hydrolisierbare Gruppe
   m für eine ganze Zahl 0, 1 oder 2
   n für eine ganze Zahl 0, 1 oder 2 und
   l für eine ganze Zahl 1, 2, 3, 4, 5 oder 6 oder 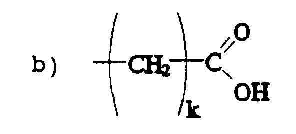
   k für eine ganze Zahl 0, 1 oder 2
R₂ für Wasserstoff oder Methyl
R₃ für einen Rest R₁, Wasserstoff oder Methyl und
R₄ für Wasserstoff oder Methyl
stehen.

Der Anteil der gepfropften Poly-α-olefine kann erfindungsgemäß zwischen 0 und 50 Gew.-%, bezogen auf den Gesamtgehalt an Poly-α-olefinen umfassen.

Der Anteil an gepfropften thermoplastischen Elastomeren kann, bezogen auf den Gehalt an thermoplastischen Elastomeren 0 bis 100 Gew.-% betragen.

Neben den gegebenenfalls gepfropften Poly-α-olefinen sind die vorwiegend modifizierten aliphatischen Harze für die Haftung auf den Substraten besonders verantwortlich. Diese werden vorzugsweise ausgewählt aus den polymerisierten Monomeren des C₅ bis C₉₋-Siedeschnittes der Petroldestillation, die nicht, oder nur teilweise hydriert sind und natürlichen Kolophoniumharzen und deren Modifikationen; Terpenharzen; Polyterpenharzen des β-Pinen, α-Pinen und/oder des δ-Limonen und Harzen erhältlich durch Copolymerisation von Terpen mit Monomeren aus dem C₅ bis C₉-Schnitt der Petroldestillation und Terpenphenolharzen. Insbesondere bevorzugt sind solche Harze, die aromatische Bindungen enthalten. Die nicht oder nur teilweise hydrierten, insbesondere aromatische Bindungen enthaltenen Klebeharze verleihen den erfindungsgemäßen Heißschmelzklebstoffen besonders gute Eigenschaften, insbesondere im Hinblick auf die miteinander zu verklebenden Substrate.

Die erfindungsgemäß einzusetzenden Polyisobutylene sind, wie eingangs erwähnt, für die Kälteflexibilität verantwortlich. Definitionsgemäß schließen die Polyisobutylene im Sinne dieser Erfindung, insbesondere Polyisobutylenöle und copolymere Polyisobutylene ein. Besonders bevorzugt sind die Polyisobutylene aus dem homopolymeren Isobutylen, insbesondere aus Homopolymeren des Isobutylen mittleren Molekulargewichts, bestimmt mittels Gelpermeationschromatographie im Bereich von 20 000 bis 5 000 000 g x mol⁻¹, Copolymeren des Isobutylens und eines konjugierten Diens in einer Menge von 0,3 bis 4,5 mol.-% bezogen auf das Copolymer und/oder Terpolymeren des Isobutylens, Divinylbenzols in einer Menge von 0,01 bis 4,5 mol.-%. und dem genannten konjugierten Dien.

Die Kälteflexibilität wie die Schmelzviskosität werden durch die Öle wie die Oligomeren oder Polymeren des iso-Butens und 1-Butens mit einem mittleren Molekulargewicht von 200 bis 20 000 g x mol⁻¹ bestimmt mittels Gelpermeationschromatographie und durch Petroldestillation gewonnene und gegebenenfalls modifizierte naphten- oder paraffinbasische Öle in dem selben Molekulargewichtsbereich günstig beeinflußt. Der Anteil derartiger Öle sollte erfindungsgemäß im Bereich von 0 bis 30 Gew.-%, bezogen auf den Heißschmelzklebstoff, liegen.

Neben den obengenannten organischen polymeren Kunststoffmaterialien können die erfindungsgemäßen Heißschmelzklebstoffe auch weitere Füllstoffe, sowie insbesondere aromatische Harze und/oder Stabilisatoren enthalten.

Besonders bevorzugt ist der Einsatz von 0 bis 50 Gew.-%, insbesondere 0 bis 40 Gew.-%, Füllstoffe und/oder 0 bis 10 Gew.-%, insbesondere 0 bis 2,5 Gew.-% aromatische Harze und/oder Stabilisatoren.

Die Füllstoffe können insbesondere ausgewählt sein aus anorganischen Füllstoffen, beispielsweise Calciumcarbonat, Dolomit, Titandioxid, Zinkoxid, Siliciumoxid, Schwerspat und Braunstein sowie aus organischen Füllstoffen, insbesondere Ruß.

Die in den erfindungsgemäßen Heißschmelzklebstoffen gegebenenfalls enthaltenen Stabilisatoren sind ausgewählt aus der Gruppe der Epoxide, sterisch gehinderten Phenolen, Aminen, Thioestern, Phosphiten sowie Triazinderivaten, Piperidinderivaten und Benzotriazolen.

Die erfindungsgemäßen Heißschmelzklebstoffe sind besonders zur Verbindung von glasartigen Kunststoffmaterialien mit thermoplastischen oder duroplastischen Kunststoffmaterialien geeignet. Die zu fügenden Substrate im Kraftfahrzeugleuchten- und scheinwerferbereich umfassen insbesondere Polypropylen als Gehäusewerkstoff und Polymethylmethacrylat oder Polycarbonat als Material für die Streuscheiben oder Lichtscheiben. Ebenso können aber auch andere Kunststoffe dafür eingesetzt werden. Allen Abdichtungs- und Klebeproblemen gleich bei Leuchten ist die originale beziehungsweise durch den vorausgegangenen Formgebungsprozess vorgegebene Substratoberfläche, d. h. diese ist nicht wesentlich modifiziert.

Das ist bei Scheinwerfern mit Kunststoffstreuscheiben, bedingt durch die Kratzfestbeschichtung, anders. Hier muß auf eine Fülle von verschiedenen möglichen Substratoberflächen mit fließenden Eigenschaftensänderungen zwischen diesen eine ausreichende Haftung an dem Streuscheibenfuß erzeugt werden.

Ein weitere Ausführungsform der vorliegenden Erfindung umfaßt daher Fahrzeugleuchten oder Fahrzeugscheinwerfer umfassend eine Lichtscheibe aus glasartigem Kunststoffmaterial und ein Lampengehäuse aus thermoplastischem oder duroplastischem Kunststoffmaterial, die dadurch gekennzeichnet sind, daß die Lichtscheibe und das Lampengehäuse mit einem Heißschmelzklebstoff, wie oben definiert, verbunden ist.

### Beispiele:

### Beispiel 1:

In einem auf 150°C temperierten Zweiwellenkneter wurde das nachstehend definierte Polyisobutylen oder der Butylkautschuk vorgelegt.

Dazu gab man etwa 1/4 der Gesamtmenge des nachstehend definierten, weichmachenden Öles und mischte etwa 30 min. Zu dieser homogenisierten Masse setzte man das thermoplastische Elastomer zu und mischte weitere 30 Minuten.

Danach wurden gegebenenfalls erforderliche Endblockharze, Füllstoffe und/oder Stabilisatoren zugesetzt und ein weiteres 1/4 der Gesamtmenge an weichmachenden Ölen zugesetzt und weitere 20 min gemischt.

Zu dieser Mischung gab man in zwei Portionen je die Hälfte an Klebeharz und α-Polyolefinen, die gegebenenfalls gepfropft sein können.

Diese Mischung wurde nach jeder Zugabe weitere 15 min geknetet.

Anschließend wurde der Rest also 1/2 der Gesamtmenge an weichmachenden Ölen zugesetzt und weitere 30 min gemischt, bis eine homogene Heißschmelzklebstoffmasse aus dem Kneter entnommen werden konnte.

| | |
|---|---|
| Thermoplastisches Elastomer | - 10 Gew.-% Kraton®G1657, |
| (Lineares Styrolblockcopolymer vom S-EB-S/SEB-Typ 13%Styrol 65 % SEB-S) | |
| Poly-α-olefin | - 20 Gew.-% D-7682-138, |
| (Amorphes Polypropylenhomopolymeres Erweichungstemperatur (R&K) = 150°C, T_{G} = -10°C) | |
| Klebeharz | - 30 Gew.-% Escorez®2101 |
| (Aliphatisches Harz mit aromatischen Gruppen Erweichungspunkt (R&K) = 93°C) | |
| Butylkautschuk | - 15 Gew.-% Butyl 100 |
| (Poly/isopren/isobutylen)copolymer, Molekulargewicht 310.000 g/mol) und | |
| weichmachendes Öl | - 25 Gew.-% Parapol®950. |
| (Polyisobutylen, Molekulargewicht durch Gelpermeationschromatographie gegen Polystyrolstandards ermittelt zu | |
| 1.400 g/mol) | |

### Beispiel 2:

Analog Beispiel 1 wurden die folgenden Komponenten miteinander vermischt:

| | |
|---|---|
| Thermoplastisches Elastomer | - 6,1 Gew.-% Tufprene®A, |
| (Lineares Styrolblockcopolymer vom S-B-S-Typ 40 % Styrol) | |
| Poly-α-olefin | - 20,1 Gew.-% P-1824-005, |
| (Amorphes Polypropylenhomopolymeres, Maleinsäureanhydrid gepfropft; Erweichungstemperatur (R&K) = 145°C, T_{G}=-10°C) | |
| Klebeharz | - 37,5 Gew.-% Wingtack®86, |
| (Synthetisches Terpenharz mit aromatischen Gruppen; Erweichungspunkt (R&K) = 88°C) | |
| Butylkautschuk | - 20,1 Gew.-% Butyl 100 |
| weichmachendes Öl | - 15,4 Gew.-% ParaminS®ECA 10788 |
| (Polyisobutylen, Molekulargewicht durch Gelpermeationschromatographie gegen Polystyrolstandards ermittelt zu 4200 g/mol) und | |
| organischer Füllstoff | - 0,8 Gew.-% Printex®75. |
| (Ruß, Dibutylphthalatabsorption 45-50 ml(DBP)/100 g | |

### Beispiel 3:

Analog Beispiel 1 wurden die folgenden Bestandteile zusammengemischt:

| | |
|---|---|
| Thermoplastisches Elastomer | - 9,3 Gew.-% Kraton®RP 6501, |
| (Lineares Styrolblockcopolymer vom S-EB-S-Typ | |
| ca. 2 % Silan aufgepfropft) | |
| Poly-α-olefin | - 32,5 Gew.-% D 7682-139, |
| (Amorphes Poly(propylen/l-buten)-copolymeres, Erweichungstemperatur (R&K) = 98 °C, T_{G} = -25°C) | |
| Klebeharz | - 21,1 Gew.-% Super STATAC®80, |
| (Aliphatisches Harz mit aromatischen Gruppen, Erweichungspunkt (R&K) = 82°C) | |
| Polyisobutylen | - 7,4 Gew.-% Oppanol®B100, |
| (Molekulargewicht durch Gelpermeationschromatographie gegen Polystyrolstandards ermittelt zu 870.000 g/mol) | |
| Polyisobutylen | - 11,1 Gew.-% Oppanol®B10 |
| (Molekulargewicht durch Gelpermeationschromatographie gegen Polystyrolstandards ermittelt zu 66.000 g/mol) | |
| weichmachendes Öl | - 9,3 Gew.-% Oppanol®B3 |
| (Polyisobutylen, Molekulargewicht durch Gelpermeationschromatographie gegen Polystyrolstandards ermittelt zu 2.000 g/mol) und | |
| Anorganischer Füllstoff | - 9,3 Gew.-% Socal®U1S2K |
| (Präzipitiertes Calciumcarbonat calcitischer Struktur, mittlerer Teilchengröße = 0,08 µm) | |

### Vergleichsbeispiel 1:

Analog Beispiel 1 wurden die Ausgangskomponenten wie folgt zusammengemischt:

| | |
|---|---|
| Thermoplastisches Elastomer | - 0,3 Gew.-% Finaprene®411, |
| (Radiales Styrolblockcopolymer vom S-B-S-Typ, 32 % Styrol) | |
| Poly-α-olefin | - 5 Gew.-% Vestoplast®520 |
| (Copolymeres Poly-α-olefin mit hohem 1-Butengehalt, | |
| Erweichungstemperatur (R&K) = 90°C, T_{G} = -25°C) | |
| Klebeharz | - 19,7 Gew.-% Zonatac®85 1, |
| (Terpenharz mit aromatischen Gruppen, Erweichungspunkt (R&K) = 89°C) | |
| teilvernetzter Butylkautschuk | - 5 Gew.-% Butyl XL®30102, |
| (Poly(isopren/isobutylen)copolymer, über Divinylbenzol vernetzt) | |
| Polyisobutylen | - 5 Gew.-% Oppanol®B150, |
| (Molekulargewicht durch Gelpermeationschromatographie gegen Polystyrolstandards ermittelt zu 1.700.000 g/mol) | |
| weichmachendes Öl | - 10 Gew.-% Oppanol®B3 und |
| weichmachendes Öl | - 15 Gew.-% Berulub®Fluid HC- 400 |
| (Poly-1-decenöl) und | |
| Anorganischer Füllstoff | - 40,0 Gew.-% Sikron®SH 300 |
| (Gemahlenes Quarzmehl, mittlere Teilchengröße = 11 µm) | |

### Vergleichsbeispiel 2:

Analog Beispiel 1 wurden unter Verwendung der folgenden Ausgangskomponenten wie folgt zusammengemischt:

| | |
|---|---|
| Thermoplastisches Elastomer | - 9,7 Gew.-% Kraton®G1652, |
| (Lineares Styrolblockcopolymer vom S-EB-S-Typ, 29 % Styrol) | |
| Thermoplastisches Elastomer | - 9,0 Gew.-% Kraton®RP6501, |
| (Lineares Styrolblockcopolymer vom S-EB-S-Typ, ca. 2 % Silan aufgepfropft) | |
| Poly-α-olefin | - 13,6 Gew.-% D-7682-139, |
| Klebeharz | - 22,5 Gew.-% Escorez®2101, |
| Polyisobutylen | - 7,2 Gew.-% Oppanol®B100, |
| Polyisobutylen | - 13,6 Gew.-% Oppanol®B10, |
| weichmachendes Öl | - 15,4 Gew.-% Oppanol®B3 und |
| Anorganischer Füllstoff | - 9,0 Gew.-% Socal®U1S2K. |

### Vergleichsbeispiel 3:

Analog Beispiel 1 wurden unter Verwendung der folgenden Ausgangskomponenten wie folgt zusammengemischt:

| | |
|---|---|
| Thermoplastisches Elastomer | - 0 Gew.-%, |
| Poly-α-olefin | - 15 Gew.-% P-1824-005, |
| Klebeharz | - 20 Gew.-% Escorez®2101, |
| Polyisobutylen | - 10 Gew.-% Oppanol®B150, |
| Polyisobutylen | - 10 Gew.-% Oppanol®B100, |
| Polyisobutylen | - 10 Gew.-% Oppanol®B15 |
| weichmachendes Öl | - 15 Gew.-% Oppanol®B3 und |
| Anorganischer Füllstoff | - 20 Gew.-% Socal®U1S2K. |

In den nachfolgenden Tabellen 1 bis 3 wird als Maß für die Verarbeitbarkeit die Fließfähigkeit unter verarbeitungsnahen Bedingungen dargestellt (Tabelle 1), die unterschiedliche Reversionsfähigkeit ohne und mit zusätzlicher Lastbeaufschlagung gezeigt (Tabelle 2) sowie die Zugfestigkeit und Anreißfestigkeit als Maß für die Ko- bzw. Adäsion auf den unterschiedlichen Substraten dargestellt (Tabelle 3).

**Tabelle 1**

| Beispiel | 1 | 2 | 3 | Vgl.1 | Vgl.2 | Vgl.3 |
|---|---|---|---|---|---|---|
| Fließfähigkeit 180°C [g/s] bei 1,5 bar Durchmesser = 4mm | 2,1 | 2,2 | 4,0 | 7,6 | 1,0 | 7,9 |

**Tabelle 2**

| Beispiel | 1 | 2 | 3 | Vgl.1 | Vgl.2 | Vgl.3 |
|---|---|---|---|---|---|---|
| Reversion [%] nach 200 % Verstreckung ohne Last | 92 | 88 | 75 | 60 | 96 | 26 |
| Reversion [%] nach 200 % Verstreckung mit Last 4,5 mN · mm⁻² | 88 | 70 | 68 | -40 | 94 | Reißt innerhalb der Prüfdauer |

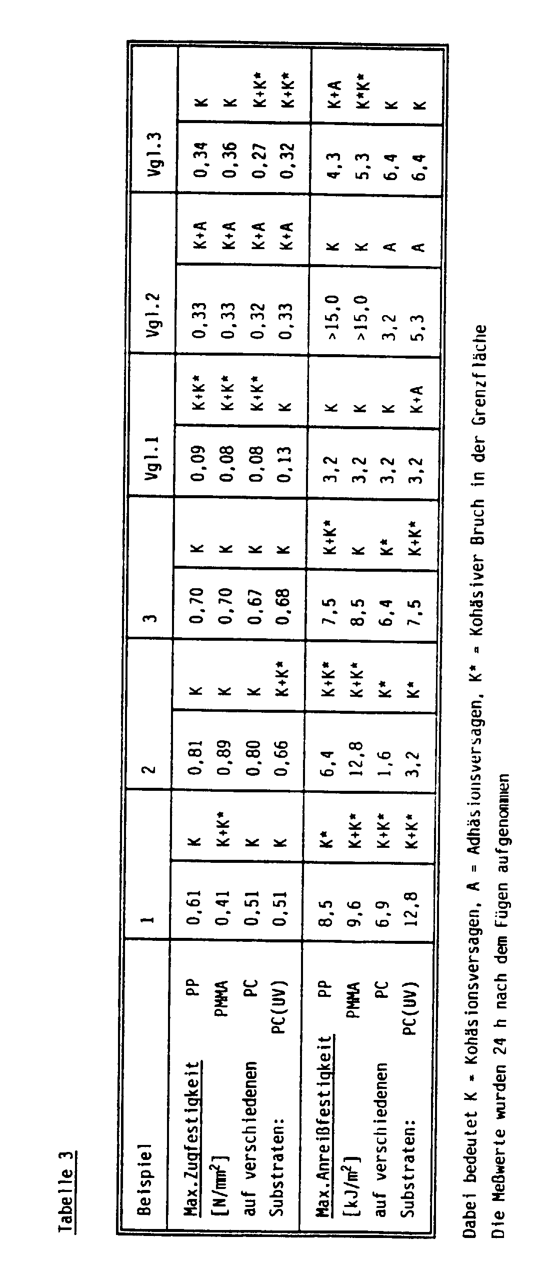

## Patentansprüche

1. Heißschmelzklebstoffe zum Verbinden von glasartigen Kunststoffmaterialien mit thermoplastischen oder duroplastischen Kunststoffmaterialien enthaltend:
a) 0,5 bis 15 Gew.-% gegebenenfalls gepfropfte thermoplastische Elastomere,
b) 5 bis 40 Gew.-% gegebenenfalls gepfropfte Poly-α-olefine mit Ausnahme von Polyisobutylen,
c) 5 bis 45 Gew.-% Klebeharze und
d) 5 bis 55 Gew.-% Polyisobutylene.

2. Heißschmelzklebstoffe nach Anspruch 1, enthaltend 0,5 bis 10 Gew.-%, gegebenenfalls gepfropfte thermoplastische Elastomere.

3. Heißschmelzklebstoffe nach Anspruch 1, enthaltend 10 bis 35 Gew.-%, gegebenenfalls gepfropfte Poly-α-olefine.

4. Heißschmelzklebstoffe nach Anspruch 1, enthaltend 15 bis 40 Gew.-%, Klebeharze.

5. Heißschmelzklebstoffe nach Anspruch 1, enthaltend 15 bis 45 Gew.-%, Polyisobutylene.

6. Heißschmelzklebstoffe nach Anspruch 1, dadurch gekennzeichnet, daß die thermoplastischen Elastomere ausgewählt sind aus Styroltypen, insbesondere SBS, SIS, SEBS und SEPS ; Elastomerlegierungen, insbesondere EPDM/PP, NR/PP, EVA/PVDC und NBR/PP; Polyurethan; Polyetherestern und Polyamiden.

7. Heißschmelzklebstoffe nach Anspruch 1, dadurch gekennzeichnet, daß die gegebenenfalls gepfropften Poly-α-olefine ausgewählt sind aus amorphen Poly-α-olefinen, den Mono-, Co- oder Terpolymere der Monomeren Ethen, Propen, 1-Buten, 1-Penten und 1-Hexen oder einem Poly-α-olefin der allgemeinen Formel (I) 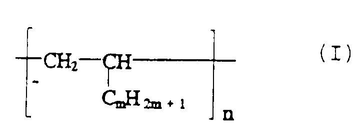 mit
m = 0 bis 15 und
n = 5 bis 2000

8. Heißschmelzklebstoffe nach Anspruch 7, dadurch gekennzeichnet, daß die Poly-α-olefine Teilkristallinität aufweisen und insbesondere Polyethylen, Polypropylen und/oder Poly-1-Buten, die in den kristallinen Bereichen hohe Taktizität aufweisen.

9. Heißschmelzklebstoffe nach Anspruch 8, dadurch gekennzeichnet, daß die Gesamtmenge an thermoplastischen Elastomeren, Poly-α-olefin und Klebeharzen weniger als 60 Gew.-% beträgt.

10. Heißschmelzklebstoffe nach einem oder mehreren der Ansprüche 7 bis 8, dadurch gekennzeichnet, daß die Poly-α-olefine mit olefinisch ungesättigten Verbindungen statistisch gepfropft werden, die insbesondere ausgewählt sind aus Maleinsäureanhydrid, Itaconsäureanhydrid, Tetrahydrophthalsäureanhydrid und Verbindungen der allgemeinen Formel (II) 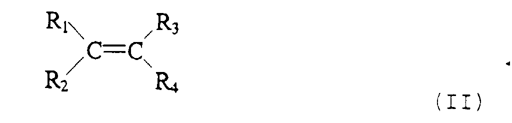 wobei
R₁ für Reste 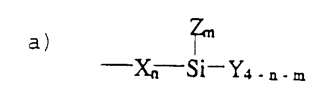 wobei
Z für Wasserstoff, einen Methylrest oder einen Phenylrest
X für 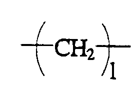 oder 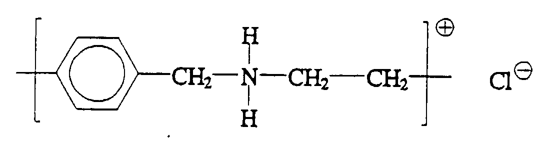
Y für eine beliebige hydrolisierbare Gruppe
m für eine ganze Zahl 0, 1 oder 2
n für eine ganze Zahl 0, 1 oder 2 und
l für eine ganze Zahl 1, 2, 3, 4, 5 oder 6 oder 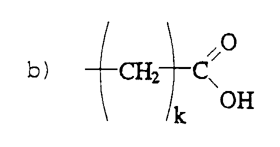
k für eine ganze Zahl 0, 1 oder 2
R₂ für Wasserstoff oder Methyl
R₃ für einen Rest R₁, Wasserstoff oder Methyl und
R₄ für Wasserstoff oder Methyl
stehen.

11. Heißschmelzklebstoffe nach Anspruch 1, dadurch gekennzeichnet, daß die Menge an gepfropften Poly-α-olefinen 0 bis 50 Gew.-% bezogen auf den Gesamtgehalt an Poly-α-olefinen beträgt.

12. Heißschmelzklebstoffe nach Anspruch 6, dadurch gekennzeichnet, daß die thermoplastischen Elastomere mit olefinisch ungesättigten Verbindungen statistisch gepfropft werden, die insbesondere ausgewählt sind aus Maleinsäureanhydrid, Itaconsäurenahydrid, Tetrahydrophthalsäureanhydrid und Verbindungen der allgemeinen Formel (II).

13. Heißschmelzklebstoffe nach Anspruch 12, dadurch gekennzeichnet, daß der Anteil an gepfropften thermoplastischen Elastomeren, bezogen auf den Gesamtgehalt der thermoplastischen Elastomeren 0 bis 100 Gew.-% beträgt.

14. Heißschmelzklebstoffe nach Anspruch 1, dadurch gekennzeichnet, daß die Klebeharze ausgewählt sind aus polymerisierten Monomeren des petrochemischen C₅ bis C₉-Siedeschnitts, die nicht oder nur teilweise hydriert sind, insbesondere aromatische Gruppen aufweisen und natürlichen Kolophoniumharzen und deren Modifikationen; Terpenharzen; Polyterpenharzen des β-Pinen, α-Pinen und/oder des δ-Limonen und Harzen erhältlich durch Copolymerisation von Terpen mit Monomeren aus dem C₅ bis C₉-Schnitt der Petroldestillation und Terpenphenolharzen.

15. Heißschmelzklebstoffe nach Anspruch 1, dadurch gekennzeichnet, daß diese Polyisobutylene aufweisen, insbesondere ausgewählt aus Homopolymeren des Isobutylens mittleren Molekulargewichts, bestimmt mittels Gelpermeationschromatographie im Bereich von 20 000 bis 5 000 000 g x mol⁻¹, Copolymeren des Isobutylens und eines konjugierten Diens in einer Menge von 0,3 bis 4,5 mol.-% bezogen auf das Copolymer und/oder Terpolymeren des Isobutylens, Divinylbenzols in einer Menge von 0,01 bis 4,5 mol.-%. und dem genannten konjugierten Dien.

16. Heißschmelzklebstoffe nach Anspruch 1, dadurch gekennzeichnet, daß die Polyisobutylene ausgewählt sind aus Polyisobutylölen, insbesondere Oligomeren oder Polymeren des iso-Butylens oder 1-Buten und durch Petroldestillation gewonnenen, gegebenenfalls modifizierten naphthen- oder paraffinbasischen Öle mit einem mittleren Molekulargewicht, bestimmt durch Gelpermeationschromatographie im Bereich von 200 bis 20 000 g x mol⁻¹.

17. Heißschmelzklebstoffe nach einem oder mehreren der Ansprüche 1 bis 16, dadurch gekennzeichnet, daß sie
e) 0 bis 50 Gew.-%, insbesondere 0 bis 40 Gew.-%, Füllstoffe und/oder
f) 0 bis 10 Gew.-%, insbesondere 0 bis 2,5 Gew.-% aromatische Harze und/oder Stabilisatoren enthalten.

18. Heißschmelzklebstoffe nach Anspruch 17, dadurch gekennzeichnet, daß die Füllstoffe ausgewählt sind aus anorganischen Füllstoffen, insbesondere Calciumcarbonat, Dolomit, Titandioxid, Zinkoxid, Siliciumoxid, Schwerspat und Braunstein und organischen Füllstoffen, insbesondere Ruß.

19. Heißschmelzklebstoffe nach Anspruch 17, dadurch gekennzeichnet, daß die Stabilisatoren ausgewählt sind aus der Gruppe der Epoxide, sterisch gehinderten Phenole, Amine, Thioester, Phosphite sowie Triazinderivate, Piperidinderivate und Benzotriazolen.

20. Verwendung von Heißschmelzklebstoffen nach einem oder mehreren der Ansprüche 1 bis 19, zur Verbindung von glasartigen Kunststoffmaterialien mit thermoplastischen oder duroplastischen Kunststoffmaterialien.

21. Verwendung nach Anspruch 20, dadurch gekennzeichnet, daß die glasartigen Kunststoffmaterialien ausgewählt sind aus Polymethylmethacrylat oder Polycarbonat und insbesondere die thermoplastischen Kunststoffmaterialien ausgewählt sind aus Polypropylen.

22. Verwendung nach Anspruch 20 oder 21, dadurch gekennzeichnet, daß man Lichtscheiben oder Streuscheiben mit Lampengehäusen von Fahrzeugleuchten oder Fahrzeugscheinwerfern verbindet.

23. Fahrzeugleuchten oder Fahrzeugscheinwerfer umfassend Lichtscheiben oder Streuscheiben, insbesondere mit Kratzfestausrüstung, aus glasartigem Kunststoffmaterial und Lampengehäuse aus thermoplastischem oder duroplastischem Kunststoffmaterial, dadurch gekennzeichnet, daß die Lichtscheiben oder Streuscheiben und Lampengehäuse mit einem Heißschmelzklebstoff wie in einem oder mehreren der Ansprüche 1 bis 19 definiert, verbunden sind.

## Claims

1. Hot melt adhesives for joining glassy polymer materials to thermoplastic or thermoset polymer materials, containing:
a) 0.5 to 15 % by weight of thermoplastic elastomers, grafted if appropriate,
b) 5 to 40 % by weight of poly-α-olefins apart from polyisobutylene, grafted if appropriate,
c) 5 to 45 % by weight of adhesive resins, and
d) 5 to 55 % by weight of polyisobutylenes.

2. Hot melt adhesives according to claim 1, containing 0.5 to 10 % by weight of thermoplastic elastomers, grafted if appropriate.

3. Hot melt adhesives according to claim 1, containing 10 to 35 % by weight of poly-α-olefins, grafted if appropriate.

4. Hot melt adhesives according to claim 1, containing 15 to 40 % by weight of adhesive resins.

5. Hot melt adhesives according to claim 1, containing 15 to 45 % by weight of polyisobutylenes.

6. Hot melt adhesives according to claim 1, characterised in that the thermoplastic elastomers are selected from styrene types, in particular SBS, SIS, SEBS and SEPS; elastomer blends, in particular EPDM/PP, NR/PP, EVA/PVDC and NBR/PP; polyurethane; polyether esters and polyamides.

7. Hot melt adhesives according to claim 1, characterised in that the poly-α-olefins, grafted if appropriate, are selected from amorphous poly-α-olefins, the monomers, copolymers or terpolymers of the monomers ethene, propene, 1-butene, 1-pentene and 1-hexene, or a poly-α-olefin having the structural formula (I) 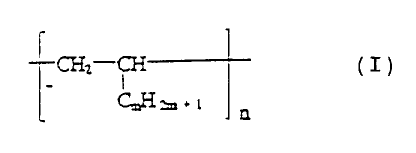 where
m = 0 to 15 and
n = 5 to 2000.

8. Hot melt adhesives according to claim 7, characterised in that the poly-α-olefins exhibit partial crystallinity and in particular polyethylene, polypropylene and/or poly-1-butene which exhibit high tacticity in the crystalline areas.

9. Hot melt adhesives according to claim 8, characterised in that the total amount of thermoplastic elastomers, poly-α-olefin and adhesive resins accounts for less than 60 % by weight.

10. Hot melt adhesives according to one or both of claims 7 and 8, characterised in that the poly-α-olefins are statistically grafted to olefinically unsaturated compounds, which in particular are selected from maleic anhydride, itaconic anhydride, tetrahydro phthalic anhydride and compounds having the structural formula (II) 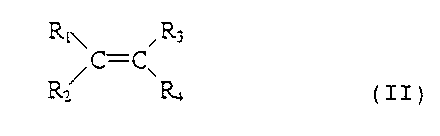 wherein
R₁ stands for radicals 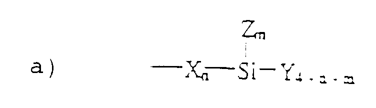 in which
Z stands for hydrogen, a methyl radical or a phenyl radical
X for 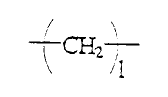 or 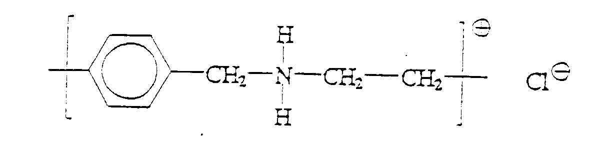
Y for any desired hydrolysable group
m for an integer 0, 1 or 2
n for an integer 0, 1 or 2, and
l for an integer 1, 2, 3, 4, 5 or 6, or 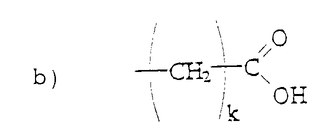
k for an integer 0, 1 or 2
R₂ for hydrogen or methyl
R₃ for a radical R₁, hydrogen or methyl, and
R₄ for hydrogen or methyl.

11. Hot melt adhesives according to claim 1, characterised in that the amount of grafted poly-α-olefins accounts for 0 to 50 % by weight, based on the overall poly-α-olefins content.

12. Hot melt adhesives according to claim 6, characterised in that the thermoplastic elastomers are statistically grafted to olefinically unsaturated compounds, in particular ones selected from maleic anhydride, itaconic anhydride, tetrahydro phthalic anhydride and compounds having the structural formula (II).

13. Hot melt adhesives according to claim 12, characterised in that the proportion of grafted thermoplastic elastomers accounts for 0 to 100 % by weight, based on the overall thermoplastic elastomers content.

14. Hot melt adhesives according to claim 1, characterised in that the adhesive resins are selected from polymerised monomers from the petrochemical C₅ to C₉ distillation cut, which are not or are only partially hydrogenated, in particular exhibit aromatic groups, and natural colophony resins and modifications thereof; terpene resins; polyterpene resins of β-pinene, α-pinene and/or of δ-limonene and resins that can be obtained by copolymerising terpene with monomers from the C₅ to C₉ petroleum distillation cut and terpene phenolic resins.

15. Hot melt adhesives according to claim 1, characterised in that they exhibit polyisobutylenes, in particular selected from homopolymers of isobutylene of average molecular weight determined by means of gel permeation chromatography in the range from 20,000 to 5,000,000 g x mol⁻¹, copolymers of isobutylene and a conjugated diene in an amount from 0.3 to 4.5 mole % based on the copolymer and/or terpolymers of isobutylene, divinylbenzene in an amount from 0.01 to 4.5 mole % and said conjugated diene.

16. Hot melt adhesives according to claim 1, characterised in that the polyisobutylenes are selected from polyisobutyl oils, in particular oligomers or polymers of isobutylene or 1-butene and recovered by petroleum distillation, naphthene-base or paraffin-base oils, modified if appropriate, having an average molecular weight determined by gel permeation chromatography in the range from 200 to 20,000 g x mol⁻¹.

17. Hot melt adhesives according to one or more of claims 1 to 16, characterised in that they contain
e) 0 to 50 % by weight, in particular 0 to 40 % by weight, of fillers and/or
f) 0 to 10 % by weight, in particular 0 to 2.5 % by weight, of aromatic resins and/or stabilisers.

18. Hot melt adhesives according to claim 17, characterised in that the fillers are selected from inorganic fillers, in particular calcium carbonate, dolomite, titanium dioxide, zinc oxide, silicon oxide, barytes and brownstone and organic fillers, in particular carbon black.

19. Hot melt adhesives according to claim 17, characterised in that the stabilisers are selected from the group comprising epoxides, sterically hindered phenols, amines, thioesters, phosphites and triazine derivatives, piperidine derivatives and benzotriazoles.

20. Use of hot melt adhesives according to one or more of claims 1 to 19, for joining glassy polymer materials to thermoplastic or thermoset polymer materials.

21. Use as claimed in claim 20, characterised in that the glassy polymer materials are selected from polymethyl methacrylate or polycarbonate, and in particular the thermoplastic polymer materials are selected from polypropylene.

22. Use as claimed in claim 20 or 21, characterised in that lenses or lens plates are joined to lamp housings of vehicle lamps or vehicle headlamps.

23. Vehicle lamps or vehicle headlamps comprising lenses or lens plates, in particular treated to make them scratch-resistant, made of glassy polymer material, and lamp housings made of thermoplastic or thermoset polymer material, characterised in that the lenses or lens plates and lamp housings are joined with a hot melt adhesive as defined in one or more of claims 1 to 19.

## Revendications

1. Colles fusibles pour l'assemblage de matières plastiques vitreuses avec des matières plastiques thermoplastiques ou thermodurcissables, qui contiennent:
a) 0,5 à 15 % en masse d'élastomères thermoplastiques éventuellement greffés,
b) 5 à 40 % en masse de poly(a-oléfines) éventuellement greffées, à l'exception du poly(isobutylène),
c) 5 à 45 % en masse de résines adhésives et
d) 5 à 55 % en masse de polyisobutylènes.

2. Colles fusibles selon la revendication 1, contenant 0,5 à 10 % en masse d'élastomères thermoplastiques éventuellement greffés.

3. Colles fusibles selon la revendication 1, contenant 10 à 35 % en masse de poly(a-oléfines) éventuellement greffées.

4. Colles fusibles selon la revendication 1, contenant 15 à 40 % en masse de résines adhésives.

5. Colles fusibles selon la revendication 1, contenant 15 à 45 % en masse de polyisobutylènes.

6. Colles fusibles selon la revendication 1, caractérisées en ce que les élastomères thermoplastiques sont choisis parmi les types styréniques, en particulier le SBS, le SIS, le SEBS et le SEPS; des alliages d'élastomères, en particulier les EPDM/PP, NR/PP, EVA/PVDC et NBR/PP; le polyuréthane, les polyétheresters et les polyamides.

7. Colles fusibles selon la revendication 1, caractérisées en ce que les poly(a-oléfines) éventuellement greffées sont choisies parmi des poly(α-oléfines) amorphes, des homopolymères, des copolymères ou des terpolymères des monomères éthylène, propylène, 1-butène, 1-pentène et 1-hexène ou des poly(α-oléfines) de formule générale (I) 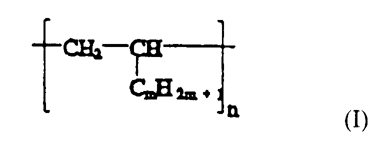 dans laquelle
m = 0 à 15 et
n = 5 à 2 000.

8. Colles fusibles selon la revendication 7, caractérisées en ce que les poly(a-oléfines) présentent une cristallinité partielle et sont en particulier du polyéthylène, du polypropylène et/ou du poly(1-butène) présentant dans les domaines cristallins une tacticité élevée.

9. Colles fusibles selon la revendication 8, caractérisées en ce que la quantité totale en élastomères thermoplastiques, poly(α-oléfine) et résines adhésives est inférieure à 60 % en masse.

10. Colles fusibles selon l'une ou plusieurs des revendications 7 à 8, caractérisées en ce que les poly(α-oléfines) sont greffées de manière statistique avec des composés à insaturation éthylénique, qui sont choisis en particulier parmi l'anhydride maléique, l'anhydride itaconique, l'anhydride tétrahydrophtalique et des composés de formule générale (II) 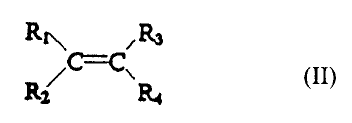 dans laquelle
R₁ représente des restes 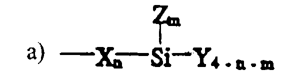 où
Z représente un atome d'hydrogène, un reste méthyle ou un reste phényle,
X représente 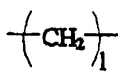 ou 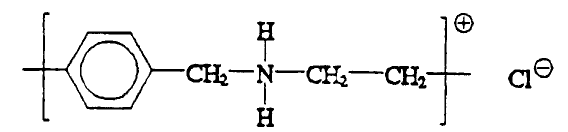
Y représente un groupe hydrolysable quelconque,
m est un nombre entier égal à 0, 1 ou 2,
n est un nombre entier égal à 0, 1 ou 2 et
l est un nombre entier égal à 1, 2, 3, 4, 5 ou 6, ou 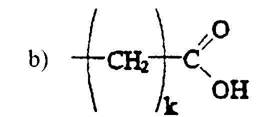
k est un nombre entier égal à 0, 1 ou 2,
R₂ représente un atome d'hydrogène ou un reste méthyle,
R₃ représente un reste R₁, un atome d'hydrogène ou un reste méthyle, et
R₄ représente un atome d'hydrogène ou un groupe méthyle.

11. Colles fusibles selon la revendication 1, caractérisées en ce que la quantité de poly(α-oléfines) greffées est comprise entre 0 et 50 % en masse par rapport à la teneur totale en poly(α-oléfines).

12. Colles fusibles selon la revendication 6, caractérisées en ce que les élastomères thermoplastiques sont greffés de manière statistique avec des composés à insaturation éthylénique qui sont choisis en particulier parmi l'anhydride maléique, l'anhydride itaconique, l'anhydride tétrahydrophtalique et des composés de formule générale (II).

13. Colles fusibles selon la revendication 12, caractérisées en ce que la fraction d'élastomères thermoplastiques greffés est comprise entre 0 et 100 % en masse par rapport à la masse totale des élastomères thermoplastiques.

14. Colles fusibles selon la revendication 1, caractérisées en ce que les résines adhésives sont choisies parmi les monomères polymérisés de la coupe de distillation pétrochimique en C₅ à C₉, qui ne sont pas hydrogénés ou ne le sont que partiellement, et qui présentent en particulier des groupes aromatiques, et les résines de colophane naturelles et leurs dérivés modifiés; des résines terpéniques; des résines polyterpéniques du β-pinène, de l'α-pinène et/ou du δ-limonène et des résines pouvant être obtenues par copolymérisation d'un terpène avec des monomères de la coupe en C₅ à C₉ de la distillation du pétrole, et des résines terpène-phénol.

15. Colles fusibles selon la revendication 1, caractérisées en ce qu'elles contiennent des polyisobutylènes choisis en particulier parmi des homopolymères de l'isobutylène dont la masse molaire moyenne, déterminée par chromatographie de perméation sur gel, est comprise entre 20000 et 5 000000 g x mol⁻¹, des copolymères de l'isobutylène et d'un diène conjugué en une quantité de 0,3 à 4,5 % en mol par rapport au copolymère et/ou des terpolymères de l'isobutylène, de divinylbenzène en une quantité de 0,01 à 4,5 % en mol et du diène conjugué précité.

16. Colles fusibles selon la revendication 1, caractérisées en ce que les polyisobutylènes sont choisis parmi des huiles de polyisobutylène, en particulier des oligomères ou polymères de l'isobutylène ou du 1-butène, et des huiles naphténiques ou paraffiniques éventuellement modifiées et obtenues par distillation du pétrole, ayant une masse molaire moyenne, déterminée par chromatographie de perméation sur gel, comprise entre 200 et 20 000 g x mol⁻¹.

17. Colles fusibles selon l'une ou plusieurs des revendications 1 à 16, caractérisées en ce qu'elles contiennent
e) 0 à 50 % en masse, en particulier 0 à 40 % en masse de charges, et/ou
f) 0 à 10 % en masse, en particulier 0 à 2,5 % en masse de résines aromatiques et/ou de stabilisants.

18. Colles fusibles selon la revendication 17, caractérisées en ce que les charges sont choisies parmi des charges inorganiques, en particulier le carbonate de calcium, la dolomite, le dioxyde de titane, l'oxyde de zinc, l'oxyde de silicium, la baryte et le dioxyde de manganèse, et des charges organiques, en particulier le noir de carbone.

19. Colles fusibles selon la revendication 17, caractérisées en ce que les stabilisants sont choisis dans le groupe des époxydes, des phénols stériquement encombrés, des amines, des thioesters, des phosphites et des dérivés de triazine, des dérivés de pipéridine et des benzotriazoles.

20. Utilisation des colles fusibles selon l'une ou plusieurs des revendications 1 à 19 pour l'assemblage de matières plastiques vitreuses avec des matières plastiques thermoplastiques ou thermodurcissables.

21. Utilisation selon la revendication 20, caractérisée en ce que les matières plastiques vitreuses sont choisies parmi le poly(méthacrylate de méthyle) ou le polycarbonate et en particulier en ce que les matières plastiques thermoplastiques sont choisies parmi les polypropylènes.

22. Utilisation selon la revendication 20 ou 21, caractérisée en ce que l'on assemble des écrans diffusants ou des diffuseurs avec des boîtiers de lampes de feux de véhicules ou de projecteurs de véhicules.

23. Feux de véhicules ou projecteurs de véhicules comprenant des écrans diffusants ou des diffuseurs, en particulier avec un revêtement anti-éraflures, en matière plastique vitreuse, et des boîtiers de lampe en matière plastique thermoplastique ou thermodurcissable, caractérisés en ce que les écrans diffusants ou les diffuseurs et les boîtiers de lampe sont assemblés avec une colle fusible telle que définie dans l'une ou plusieurs des revendications 1 à 19.
